# EUROPEAN PATENT APPLICATION

(11) **EP 2 743 538 A2**
(43) Date of publication of application: **18.06.2014**
(21) Application number: 13197101.2
(22) Date of filing: 13.12.2013
(51) Int. Cl.: F16F 9/46

(54) **Damping force control valve and shock absorber**

(30) Priority: 14.12.2012 JP 2012273241
(71) Applicant: Yamaha Motor Hydraulic System Kabushiki Kaisha, Shuchi-gun, Shizuoka 437-0223 (JP)
(72) Inventor: Ito, Keisuke, Shuchi-gun, Shizuoka 437-0223 (JP)
(74) Representative: Zimmermann, Tankred Klaus

(57) **Abstract**

A damping force control valve (10) is described that is able to exert a stable damping force even when inflow and outflow directions of a working fluid are interchanged. The damping force control valve (10) includes a cylinder part (13) and a plunger part (34). The cylinder part (13) includes an internal space (30) that extends in an axial direction (X) of the cylinder part (13). The plunger part (34) is arranged in the internal space (30) such that the plunger part (34) is movable along an axis line of the cylinder part (13). The cylinder part (13) has, in an inner circumferential surface thereof, a first port (28) and a second port (29) that are configured to be in communication with a first passage (33) formed in the plunger part (34). The first port (28) and the second port (29) are positioned so as to intersect with the same plane that is perpendicular to the axis line of the cylinder part (13). Each of the first port (28) and the second port (29) is in communication with a working fluid passage (31, 32) that extends from the inner circumferential surface of the cylinder part (13) in a direction radially outward of the cylinder part (13). The first port (28) and the second port (29) are communicable with each other via the first passage (33). The plunger part (34) is configured such that opposite ends thereof are located within the internal space (30) and in communication with each other via a second passage (21) that is different from the first passage (33). The damping force control valve (10) is configured such that, when the first port (28) and the second port (29) come into communication with each other via the first passage (33) by a movement of the plunger part (34), a portion of the first port (28) and a portion of the second port (29) that communicate with the first passage (33) are caused, the portions being caused at the same side in the first and second ports (28, 29) along the axial direction (X) of the cylinder part (13), and the first port (28), the second port (29), and the first passage (33) being located between the opposite ends of the plunger part (34) with respect to the axial direction (X) of the cylinder part (13).

## Description

### TECHNICAL FIELD

The present invention relates to a damping force control valve and a shock absorber.

### BACKGROUND ART

In an automobile, a motorcycle, or the like, a shock absorber (buffer) is generally provided for damping vibrations caused in a vehicle. The shock absorber normally includes a cylinder, and a piston and a support shaft that supports the piston are arranged in the cylinder. The interior of the cylinder is divided into two oil chambers by the piston. The piston moves in association with expansion or contraction of the shock absorber, and thereby oil moves between the two oil chambers. An orifice, a valve, or the like, that defines a fluid passage with a relatively narrow passage area, is arranged in a path of movement of the oil. A pressure loss occurring when the oil passes through the fluid passage having such a small area is used to generate a damping force, for damping vibrations caused in the vehicle.

Among conventional shock absorbers, there is a shock absorber including a damping force control valve (variable orifice) whose aperture is adjustable under an electronic control. Types of this shock absorber include a shock absorber in which the valve is placed inside a cylinder and a shock absorber in which the valve is placed outside a cylinder. In either of them, adjusting the aperture of the valve in accordance with running conditions enables a control of the damping force.

Examples of a conventional damping force control valve include a damping force control valve disclosed in WO 2011/078317 A1. In the damping force control valve disclosed in WO 2011/078317 A1, as shown in FIG. 9 (see FIG. 8 of WO 2011/078317 A1), a plunger 200 configured to move linearly to and fro by means of a solenoid is received through a guide hole 234c that is formed in a first oil chamber 234. The first oil chamber 234 is in communication with a second oil chamber (not shown) via a passage 200e in the plunger 200. The second oil chamber corresponds to an oil chamber 112 in WO 2011/078317 A1. The first oil chamber 234 has a port 234b that is provided at a position opposed to an end surface 200c of the plunger 200.

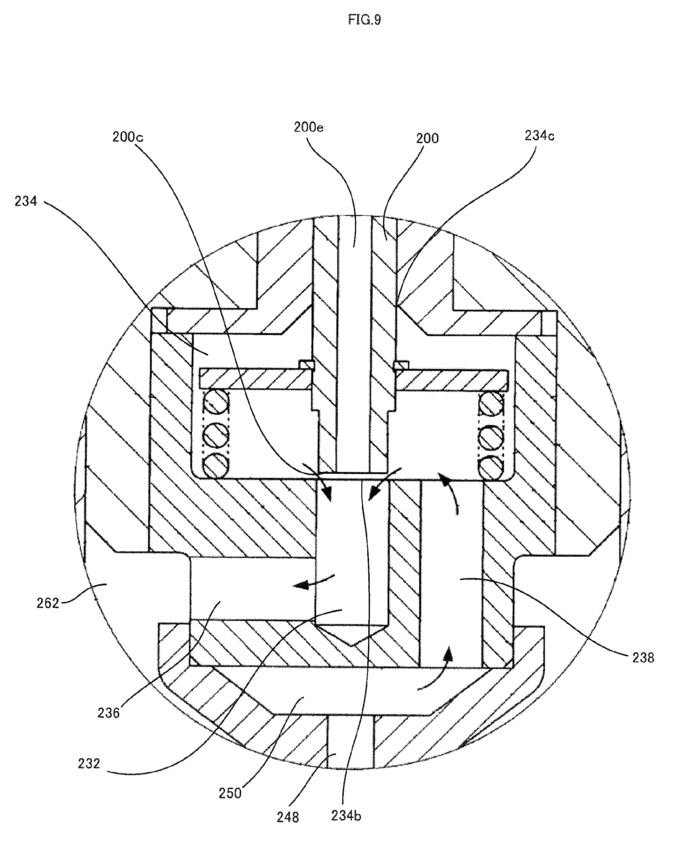

In the damping force control valve disclosed in WO 2011/078317 A1, a working fluid flows through working fluid passages 248, 250, 238, the first oil chamber 234, the port 234b, and working fluid passages 232, 236, 262, in this order as indicated by the arrows in FIG. 9. The aperture of a gap formed between the port 234b and the end surface 200c of the plunger 200 changes depending on the position of the end surface 200c of the plunger 200, and thereby the damping force is controlled.

### SUMMARY OF THE INVENTION

An object of the present invention is to provide a damping force control valve that is able to exert a stable damping force even when inflow and outflow directions of a working fluid are interchanged, and also to provide a shock absorber.

This object is achieved by a damping force control valve according to claim 1.

The invention is based on the following findings of the inventors. In the damping force control valve disclosed in WO 2011/078317 A1, the working fluid flows from the first oil chamber 234 and passes through the gap formed between the port 234b and the end surface 200c of the plunger 200, to enter the working fluid passage 232.

If, in the damping force control valve disclosed in WO 2011/078317 A1, the working fluid is caused to flow in the direction reverse to the direction indicated by the arrows in FIG. 9, the working fluid flows from the working fluid passage 232 and passes through the port 234b, to collide with the end surface 200c of the plunger 200.

Thus, in the damping force control valve disclosed in WO 2011/078317 A1, switching between inflow and outflow directions of the working fluid results in a considerable change in a path through which the working fluid flows. Therefore, to obtain a stable damping force, it is necessary that the inflow and outflow directions of the working fluid are limited to a single direction. This causes a problem that an applicable structure of a shock absorber is limited.

The present invention, which is accomplished in view of the problems described above, adopts the following configurations.
(1) A damping force control valve including a cylinder part and a plunger part, the cylinder part including an internal space that extends in an axial direction of the cylinder part,
   the plunger part being arranged in the internal space such that the plunger part is movable along an axis line of the cylinder part,
   the cylinder part has, on an inner circumferential surface thereof, a first port and a second port that are configured to be in communication with a first passage formed on the plunger part,
   the first port and the second port being positioned so as to intersect with the same plane that is perpendicular to the axis line of the cylinder part, each of the first port and the second port being in communication with a working fluid passage that extends from the inner circumferential surface of the cylinder part in a direction radially outward of the cylinder part, the first port and the second port being communicable with each other via the first passage,
   the plunger part being configured such that opposite ends thereof are located within the internal space and in communication with each other via a second passage that is different from the first passage,
   the damping force control valve being configured such that, when the first port and the second port come into communication with each other via the first passage by a movement of the plunger part, a portion of the first port and a portion of the second port that communicate with the first passage are caused, the portions being at the same side of the first and second ports along the axial direction of the cylinder part; and the first port, the second port, and the first passage being located between the opposite ends of the plunger part with respect to the axial direction of the cylinder part.

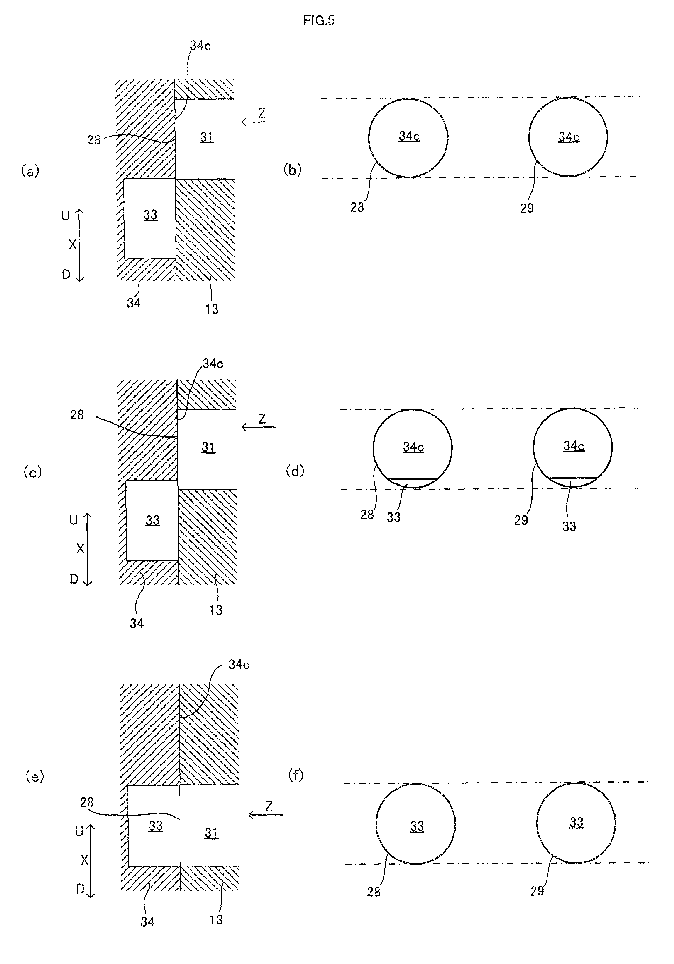

The damping force control valve of (1) enables a damping force to be controlled by adjusting the area of the portion of the first port that communicates with the first passage and the area of the portion of the second port that communicates with the first passage. When the working fluid passes through these communication portions, the flow velocity of the working fluid increases, so that a pressure fluctuation occurs. Due to the pressure fluctuation, a relatively large force is applied to portions of the plunger part that face these communication portions. In a configuration of (1), the first port and the second port are formed at positions that intersect with the same plane perpendicular to the axis line of the cylinder part, and each of the first port and the second port is in communication with the working fluid passage that extends from the inner circumferential surface of the cylinder part in the direction radially outward of the cylinder part. When the first port and the second port come into communication with each other via the first passage along with movement of the plunger part, the portion of the first port and the portion of the second port that communicate with the first passage are caused at the same side (for example, in the direction D) on the first and second ports with respect to the axis of the cylinder part (see FIG. 5(c), (d)). This enables similar flow rate characteristics (damping force characteristics) to be obtained even when inflow and outflow directions of the working fluid are interchanged.

Thus, in accordance with embodiments, the damping force control valve is configured such that an opening in both the first port and the second port, from the same direction relative to the axis line of the cylinder part, is formed as the plunger part moves, allowing communication between the first port and the second port via the first passage, where the first port, the second port and the first passage are located between the opposite ends of the plunger part with respect to the axial direction of the cylinder part. The movement of the plunger part causes a portion of the first port and a portion of the second port that communicate with the first passage, the portions being caused at the same side of the first and second ports along the axial direction of the cylinder part. The opening in both the first and second ports corresponds to the portion of the first port and the portion of the second port that communicate with the first passage respectively.

When the first port and the second port come into communication with each other via the first passage along with movement of the plunger part, the first port, the second port, and the first passage are located between the opposite ends of the plunger part with respect to the axial direction of the cylinder part. The opposite ends of the plunger part are in communication with each other via the second passage. As a result, a resistance of the working fluid occurring at a time when the plunger part moves can be reduced irrespective of inflow and outflow directions of the working fluid. This can improve responsiveness of the plunger part to a control command in a case of, for example, timely controlling the position of the plunger part in accordance with the status that the vehicle is running.

Accordingly, the configuration of (1) is able to exert a stable damping force even when inflow and outflow directions of the working fluid are interchanged. As a result, the configuration is applicable to more types of structures of a shock absorber. Particularly, the configuration is applicable to a piston arranged in a cylinder of the shock absorber. Therefore, the structure of the shock absorber can be simplified.

(2) The damping force control valve according to (1), wherein
the plunger part is configured to be movable, by means of a solenoid, linearly to and fro within a range as long as the first port, the second port, and the first passage are located between the opposite ends of the plunger part with respect to the axial direction of the cylinder part.

In a configuration of (2), the solenoid causes the plunger part to move linearly to and fro. This enables the plunger part to be quickly moved to a target position, thus providing an excellent responsiveness. Additionally, since the plunger part is moved linearly to and fro within the range as long as the first port, the second port, and the first passage are located between the opposite ends of the plunger part with respect to the axial direction of the cylinder part. As described above, a stable damping force can be obtained even when inflow and outflow directions of the working fluid are interchanged. Thus, the configuration of (2) is able to exert a stable damping force while improving the responsiveness of the plunger part and the controllability of the position of the plunger part.

(3) The damping force control valve according to (1) or (2), wherein
when the plunger part moves within a range as long as the first port, the second port, and the first passage are located between the opposite ends of the plunger part with respect to the axial direction of the cylinder part; the area over which the first port communicates with the first passage and the area over which the second port communicates with the first passage are changed, while the ratio between the area over which the first port communicates with the first passage and the area over which the second port communicates with the first passage are substantially kept constant.

In a configuration of (3), when the plunger part moves, the area over which the first port communicates with the first passage and the area over which the second port communicates with the first passage are changed, but the ratio between the area over which the first port communicates with the first passage and the area over which the second port communicates with the first passage is substantially kept constant. Accordingly, irrespective of the apertures of the first port and the second port, a stable damping force can be obtained even when inflow and outflow directions of the working fluid are interchanged.

(4) The damping force control valve according to (3), wherein
the area of the first port and the area of the second port are substantially equal.

A configuration of (4) enables more similar flow rate characteristics (damping force characteristics) to be obtained even when inflow and outflow directions of the working fluid are interchanged. Thus, a more stable damping force can be obtained.

(5) The damping force control valve according to any one of (1) to (3), wherein
a plurality of pairs of the first ports and the second ports are formed on the inner circumferential surface of the cylinder part.

In a configuration of (5), a plurality of pairs of the first ports and the second ports are provided. Therefore, a load occurring in a radial direction of the plunger part is likely to balance, in each of cases where the working fluid flows through the first port and the working fluid flows through the second port. This can reduce a frictional force occurring between the cylinder part and the plunger part. As a result, a more stable damping force can be obtained.

(6) The damping force control valve according to any one of (1) to (5), wherein
when the first port and the second port are in communication with each other via the first passage; the first port, the second port, and the first passage are positioned so as to intersect with the same plane that is perpendicular to the axis line of the cylinder part.

A configuration of (6) enables more similar flow rate characteristics (damping force characteristics) to be obtained even when inflow and outflow directions of the working fluid are interchanged. Thus, a more stable damping force can be obtained.

(7) A shock absorber including
the damping force control valve according to any one of (1) to (6).

A configuration of (7) is able to exert a stable damping force even when inflow and outflow directions of the working fluid are interchanged.

(8) The shock absorber according to (7), comprising
a cylinder, a piston, a first working fluid chamber, and a second working fluid chamber, the piston being arranged in the cylinder so as to be movable in the axial direction of the cylinder, the piston dividing the interior of the cylinder into the first working fluid chamber and the second working fluid chamber,
the first port is in communication with the first working fluid chamber via the working fluid passage,
the second port is in communication with the second working fluid chamber via the working fluid passage.

A configuration of (8) is able to exert a stable damping force even when inflow and outflow directions of the working fluid are interchanged.

### EFFECTS OF THE INVENTION

The present invention is able to exert a stable damping force even when inflow and outflow directions of a working fluid are interchanged.

These and other objects, features, aspects and advantages of the present invention will become more apparent from the following detailed description, which, taken in conjunction with the accompanying drawings, discloses some embodiments of the present invention.

### BRIEF DESCRIPTION OF THE DRAWINGS

[FIG. 1] (a) is a vertical cross-sectional view schematically showing a state where a damping force control valve according to a first embodiment of the present invention is closed; and (b) shows a cross-section as taken along the line A-A of (a).
[FIG. 2] (a) and (b) are diagrams showing, on an enlarged scale, a part of the damping force control valve shown in FIG. 1(a) and (b), and illustrating a situation where a working fluid flows into first ports of the damping force control valve; and (c) and (d) are diagrams showing, on an enlarged scale, a part of the damping force control valve shown in FIG. 1(a) and (b), and illustrating a situation where a working fluid flows into second ports of the damping force control valve.
[FIG. 3] (a) is a vertical cross-sectional view schematically showing a state where the damping force control valve shown in FIG. 1 is opened; and (b) shows a cross-section as taken along the line B-B of (a).
[FIG. 4] (a) and (b) are diagrams showing, on an enlarged scale, a part of the damping force control valve shown in FIG. 3(a) and (b), and illustrating a situation where a working fluid flows into the first ports of the damping force control valve; and (c) and (d) are diagrams showing, on an enlarged scale, a part of the damping force control valve shown in FIG. 3(a) and (b), and illustrating a situation where a working fluid flows into the second ports of the damping force control valve.
[FIG. 5] (a) is a partial cross-sectional view showing, on an enlarged scale, the first port that is fully closed; (b) shows the first port and the second port in a state shown in (a), as seen along a direction indicated by the arrow Z; (c) is a partial cross-sectional view showing, on an enlarged scale, the first port that is partially opened; (d) shows the first port and the second port in a state shown in (c), as seen along a direction indicated by the arrow Z; (e) is a partial cross-sectional view showing, on an enlarged scale, the first port that is fully opened; and (f) shows the first port and the second port in a state shown in (e), as seen along a direction indicated by the arrow Z.
[FIG. 6] (a) is a vertical cross-sectional view schematically showing a state where a damping force control valve according to a second embodiment of the present invention is closed; and (b) shows a cross-section as taken along the line A-A of (a).
[FIG. 7] A horizontal cross-sectional view showing a variation of the damping force control valve according to the present invention.
[FIG. 8] A partial cross-sectional view showing, on an enlarged scale, an example of a shock absorber including the damping force control valve shown in FIG. 1.
[FIG. 9] A cross-sectional view schematically showing, on an enlarged scale, a part of a conventional damping force control valve.

### EMBODIMENTS FOR CARRYING OUT THE INVENTION

### «Damping Force Control Valve»

### <First Embodiment>

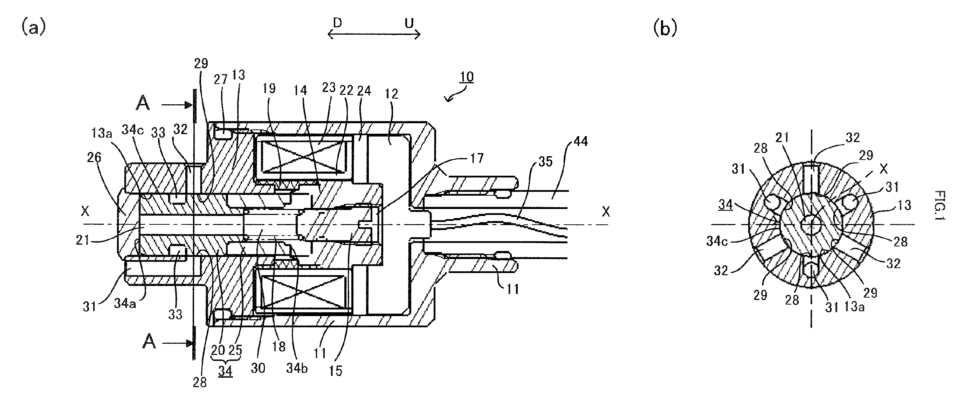

FIG. 1(a) is a vertical cross-sectional view schematically showing a state where a damping force control valve according to a first embodiment of the present invention is closed. FIG. 1(b) shows a cross-section as taken along the line A-A of FIG. 1(a). In FIG. 1(a), a direction D is a direction in which a plunger part 34 advances along an axis line X of a cylinder part 13. A direction U is a direction in which the plunger part 34 retracts. In this embodiment, advancing of the plunger part 34 brings a damping force control valve 10 into a closed state, and retraction of the plunger part 34 brings the damping force control valve 10 into an open state. Thus, the direction D is a valve closing direction, and the direction U is a valve opening direction.

The damping force control valve 10 includes an outer cylinder 11 in the shape of a hollow tube. A base 12 in the shape of a substantially flat plate is arranged in the outer cylinder 11. An annular member 24 made of a magnetic material is arranged at a side of the base 12 in the direction D. A bobbin 22 having a cylindrical shape is arranged at a side of the annular member 24 in the direction D. A solenoid coil 23 is wound on the bobbin 22. A support shaft 44 in the shape of a hollow tube is arranged at the side of the outer cylinder 11 in the direction U. A cable 35 is provided in the support shaft 44. The cable 35 is connected to the solenoid coil 23. Power is supplied from an external power source (not shown) to the solenoid coil 23 via the cable 35. A support member 14 for supporting a spring-bearing member 15 is arranged inside the annular member 24 and the bobbin 22 (solenoid coil 23) with respect to a radial direction. The cylinder part 13 is fitted in an opening of the outer cylinder 11 at its side in the direction D. A sealing member 27 is provided between the cylinder part 13 and the outer cylinder 11. A cylindrical member 19 is arranged radially inside the bobbin 22 (solenoid coil 23) at a location between the cylinder part 13 and the support member 14. A cap 26 is fitted to the cylinder part 13 at its side in the direction D. The support member 14 and the spring-bearing member 15 are positioned at the side of the cylinder part 13 in the direction U.

The cylinder part 13 has an internal space 30 extending in a direction of the axis line X of the cylinder part 13. In this embodiment, the internal space 30 is a space existing radially inside an inner circumferential surface 13a of the cylinder part 13. The internal space 30 is, at the side in the direction D, closed by the cap 26. The internal space 30 is, at the side in the direction U, closed by the support member 14 and the spring-bearing member 15. In other words, the internal space 30 is located between the cap 26, and the support member 14 and the spring-bearing member 15 with respect to the direction of the axis line X of the cylinder part 13. In the present invention, it is not always necessary that the internal space 30 is closed at its sides with respect to the direction of the axis line X of the cylinder part 13. The internal space 30 may be opened with respect to the direction of the axis line X of the cylinder part 13.

The plunger part 34 is arranged in the internal space 30 such that the plunger part 34 is movable along the axis line X of the cylinder part 13. The plunger part 34 includes a front-end cylinder 20 and a rear-end cylinder 25. The front-end cylinder 20, which is made of a non-magnetic material, is located at the side in the direction D. The rear-end cylinder 25, which is made of a magnetic material, is located at the side in the direction U. The present invention is not limited to this example. It may be acceptable that plunger part 34 is made of a magnetic material.

An outer circumferential surface 34c of the plunger part 34 is in contact with the inner circumferential surface 13a of the cylinder part 13. Along with movement of the plunger part 34, the outer circumferential surface 34c of the plunger part 34 slides relative to the inner circumferential surface 13a of the cylinder part 13. In FIG. 1, a front end 34a of the plunger part 34 is in abutting contact with the cap 26. The front end 34a of the plunger part 34 includes a surface that is perpendicular to the axis line X of the cylinder part 13.

The support member 14 and the spring-bearing member 15 are located at the side of a rear end 34b of the plunger part 34 in the direction U. A coil spring 18 is arranged between the spring-bearing member 15 and the plunger part 34. The coil spring 18 is supported on the spring-bearing member 15. The coil spring 18 applies a force traveling in the direction D to the plunger part 34.

A position adjustment member 17 for adjusting the position of the spring-bearing member 15 is arranged at the side of the spring-bearing member 15 in the direction U. Operating the position adjustment member 17 causes the spring-bearing member 15 to move in the direction D or the direction U within the support member 14. As a result, the force that the coil spring 18 applies to the plunger part 34 is adjusted.

The solenoid coil 23 is arranged at the outer peripheral side of the plunger part 34. An electromagnetic force caused upon feeding of a current to the solenoid coil 23 sucks the plunger part 34 in the direction U. Adjusting power supplied to the solenoid coil 23 results in adjustment of the force that the solenoid coil 23 applies to the plunger part 34.

In the damping force control valve 10, the plunger part 34 moves in the direction U when a current is fed to the solenoid coil 23, while the plunger part 34 moves in the direction D when the feeding of the current is interrupted. Adjusting the power supplied to the solenoid coil 23 results in adjustment of the position of the plunger part 34. Adjusting the power supply in accordance with a status of running of the vehicle can achieve a timely control of the position of the plunger part 34. A conventionally known method is adoptable for controlling the position of the plunger part 34 based on adjustment of the power supply in accordance with the status of running of the vehicle, and a description thereof is omitted herein.

A first port 28 and a second port 29 are formed on the inner circumferential surface 13a of the cylinder part 13. The first port 28 and the second port 29 are configured for communication with a first passage 33 that is formed on the plunger part 34. The first port 28 and the second port 29 are opposed to each other with respect to a diametrical direction of the cylinder part 13.

In this embodiment, the first port 28 and the second port 29 have the same shape when seen from the center of the cylinder part 13 with respect to the radial direction. More specifically, the shapes of the first port 28 and the second port 29 are circles having the same diameter (see FIG. 5(b), FIG. 5(d), and FIG. 5(f)). The first port 28 and the second port 29 are positioned such that they intersect with the same plane (for example, a cross-section taken along the line A-A (see FIG. 1)) that is perpendicular to the axis line X of the cylinder part 13.

In the damping force control valve 10, as shown in FIG. 1(b), a plurality of (three) pairs of the first ports 28 and the second ports 29 are formed on the inner circumferential surface 13a of the cylinder part 13. In the present invention, the number of the pairs of the first ports 28 and the second ports 29 are not particularly limited. The first port 28 and the second port 29 in each pair are opposed to each other with respect to the diametrical direction of the cylinder part 13. The first ports 28 and the second ports 29 are alternately formed throughout the inner circumference of the cylinder part 13 and arranged at regular intervals with respect to a circumferential direction of the cylinder part 13.

The cylinder part 13 has working fluid passages 31 and 32 formed therein. The working fluid passages 31 and 32 extend radially outward of the cylinder part 13 from the inner circumferential surface 13a of the cylinder part 13.

The working fluid passages 31 extend from the first ports 28 in the direction radially outward of the cylinder part 13 (downward in FIG. 1(a)), then extend in the direction D with respect to the axis line X of the cylinder part 13, and then reach the outside of the cylinder part 13. That is, each of the working fluid passages 31 includes a portion that extends from the first port 28 in the direction radially outward of the cylinder part 13.

The working fluid passages 32 extend from the second ports 29 in the direction radially outward of the cylinder part 13 (upward in FIG. 1(a)). Thus, each of the working fluid passages 31 and 32 has a portion that extends from the inner circumferential surface 13a of the cylinder part 13 in the direction radially outward of the cylinder part 13.

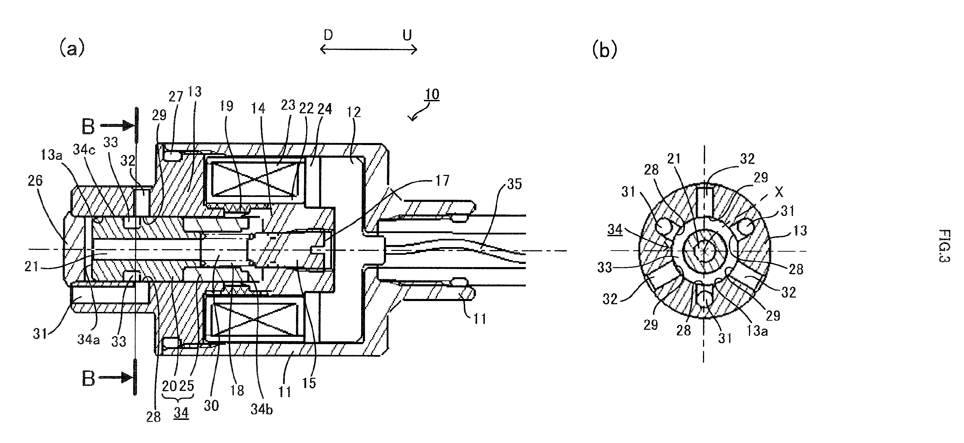

The first passage 33 includes a groove that is formed on the outer circumferential surface 34c of the plunger part 34. The groove extends in a circumferential direction of the plunger part 34. The groove and the inner circumferential surface 13a of the cylinder part 13 define the first passage 33. The first passage 33 is formed so as to intersect with a plane (for example, a cross-section taken along the line B-B (see FIG. 3)) that is perpendicular to the axis line X of the cylinder part 13. The first passage 33 is located in the internal space 30. The first ports 28 and the second ports 29 are communicable with each other via the first passage 33 (see FIG. 3).

The first ports 28, the second ports 29, and the first passage 33 are located between the front end 34a and the rear end 34b of the plunger part 34 with respect to the direction of the axis line X of the cylinder part 13. In other words, the plunger part 34 is movable, by a solenoid, linearly to and fro within a range as long as the first ports 28, the second ports 29, and the first passage 33 are positioned between the front end 34a and the rear end 34b of the plunger part 34 with respect to the direction of the axis line X of the cylinder part 13.

When the plunger part 34 is positioned toward the direction D (see FIG. 1), the first ports 28 and the second ports 29 are closed by the outer circumferential surface 34c of the plunger part 34, and therefore not in communication with the first passage 33. When the plunger part 34 is moved toward the direction U (see FIG. 3), the first ports 28 and the second ports 29 come into communication with the first passage 33.

The plunger part 34 has a second passage 21 that penetrates through the plunger part 34 in the direction of the axis line X of the cylinder part 13. The front end 34a and the rear end 34b of the plunger part 34 communicate with each other via the second passage 21. The second passage 21 is located in the internal space 30.

The first passage 33 and the second passage 21 are located in the internal space 30. The second passage 21 is a passage different from the first passage 33. The first passage 33 is formed so as to intersect with the plane (for example, the cross-section taken along the line B-B (see FIG. 3)) that is perpendicular to the axis line X of the cylinder part 13. The second passage 21 is formed so as to extend in the direction of the axis line X of the cylinder part 13. The first passage 33 and the second passage 21 are separated from each other by the plunger part 34. The first passage 33 and the second passage 21 are not in communication at a location between the front end 34a and the rear end 34b of the plunger part 34 with respect to the direction of the axis line X of the cylinder part 13.

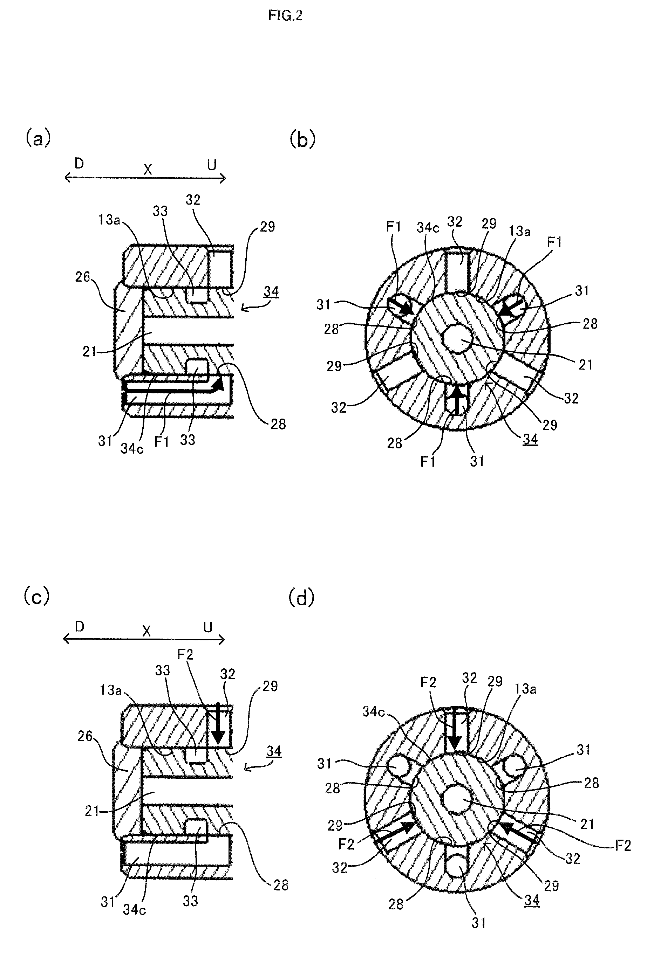

Next, a state where a working fluid flows into the damping force control valve 10 shown in FIG. 1 will be described with reference to FIG. 2.

FIG. 2(a) and FIG. 2(b) are diagrams showing, on an enlarged scale, a part of the damping force control valve 10 shown in FIG. 1(a) and FIG. 1(b), and illustrating a situation where a working fluid flows into the first ports 28 of the damping force control valve 10. For convenience of the description, a working fluid that flows in the working fluid passages 31 from the outside of the cylinder part 13 will be referred to as a working fluid F1, and a working fluid that flows in the working fluid passages 32 from the outside of the cylinder part 13 will be referred to as a working fluid F2. It should be noted that the working fluids F1 and F2 are the same working fluid.

As shown in FIG. 2(a), the first ports 28 are closed by the outer circumferential surface 34c of the plunger part 34. The working fluid F1 flows in the direction U in the working fluid passages 31, and then flows radially inward of the cylinder part 13, to be blocked by the plunger part 34.

As shown in FIG. 2(b), the working fluid F1 passes through the plurality of (three) the working fluid passages 31 and reaches the plurality of (three) first ports 28 arranged at regular intervals with respect to the circumferential direction of the cylinder part 13, to be blocked by the plunger part 34. Thus, a load occurring in the radial direction of the plunger part 34 is likely to balance. This can reduce a frictional force occurring between the cylinder part 13 and the plunger part 34.

FIG. 2(c) and FIG. 2(d) are diagrams showing, on an enlarged scale, a part of the damping force control valve 10 shown in FIG. 1(a) and FIG. 1(b), and illustrating a situation where a working fluid flows into the second ports 29 of the damping force control valve 10.

As shown in FIG. 2(c), the second ports 29 are closed by the outer circumferential surface 34c of the plunger part 34. The working fluid F2 flows in the working fluid passages 32 in the direction radially inward of the cylinder part 13, to be blocked by the plunger part 34.

As shown in FIG. 2(d), the working fluid F2 passes through the plurality of (three) the working fluid passages 32 and reaches the plurality of (three) second ports 29 arranged at regular intervals with respect to the circumferential direction of the cylinder part 13, to be blocked by the plunger part 34. Thus, a load occurring in the radial direction of the plunger part 34 is likely to balance. This can reduce a frictional force occurring between the cylinder part 13 and the plunger part 34.

Since each working fluid passage 31 has a portion that extends from the first port 28 in the direction radially outward of the cylinder part 13, the working fluid F1 flows in the working fluid passage 31 in the direction radially inward of the cylinder part 13, and then collides with the plunger part 34. Since each working fluid passage 32 extends in the radial direction of the cylinder part 13, the working fluid F2 flows in the working fluid passage 32 in the radial direction of the cylinder part 13, and then collides with the plunger part 34. Additionally, the first ports 28 and the second ports 29 are arranged at regular intervals along the circumferential direction of the cylinder part 13. Therefore, similar flow rate characteristics (damping force characteristics) are obtained irrespective of in which of the directions the working fluid flows.

Next, the damping force control valve 10 in an open state will be described with reference to FIG. 3.

FIG. 3(a) is a vertical cross-sectional view schematically showing a state where the damping force control valve shown in FIG. 1 is opened. FIG. 3(b) shows a cross-section as taken along the line B-B.

The damping force control valve 10 is configured such that the plunger part 34 is moved in the direction U upon feeding of a current to the solenoid coil 23. As a result, the first ports 28 and the second ports 29 come into communication with each other via the first passage 33. As shown in FIG. 3(a), a portion of each first port 28 and a portion of each second port 29 that communicate with the first passage 33 are caused at the same side (in the direction D) on the first and second ports 28 and 29 with respect to the axis line X of the cylinder part 13.

The first ports 28, the second ports 29, and the first passage 33 are positioned such that they intersect with the same plane (for example, a cross-section taken along the line B-B (see FIG. 3(b))) that is perpendicular to the axis line X of the cylinder part 13. In other words, the first ports 28, the second ports 29, and the first passage 33 are positioned on a single plane (cross-section) that is perpendicular to the axis line X of the cylinder part 13.

As shown in FIGS. 1 and 3, the area over which the first ports 28 communicate with the first passage 33 and the area over which the second ports 29 communicate with the first passage 33 are changed in accordance with movement of the plunger part 34, but the shape of the first passage 33 is not changed. That is, the length of a path of the first passages 33 and the cross-sectional area of the path of the first passages 33 are not changed.

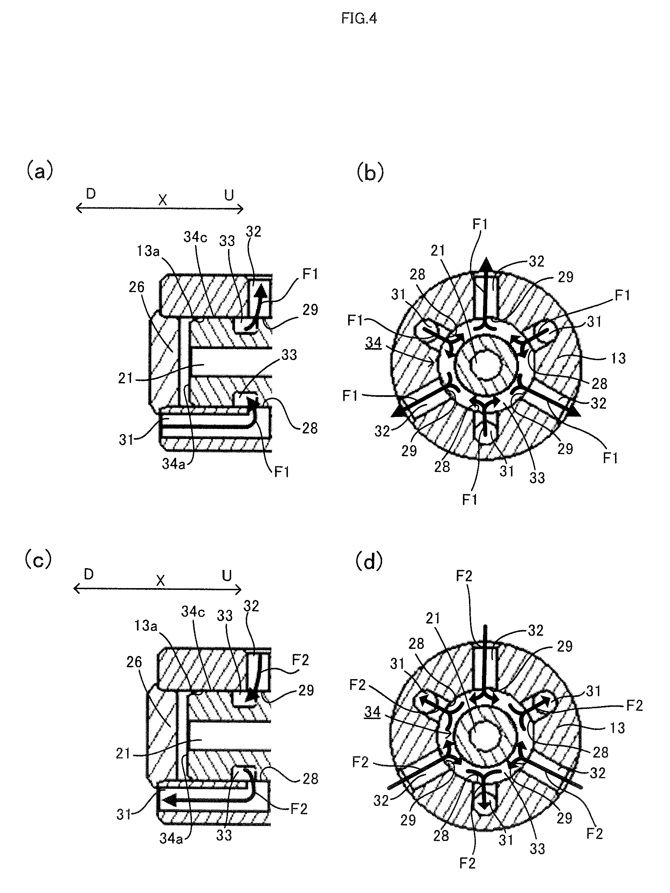

Next, a state where a working fluid flows into the damping force control valve 10 shown in FIG. 3 will be described with reference to FIG. 4.

FIG. 4(a) and FIG. 4(b) are diagrams showing, on an enlarged scale, a part of the damping force control valve 10 shown in FIG. 3(a) and FIG. 3(b), and illustrating a situation where a working fluid flows into the first ports 28 of the damping force control valve 10.

As shown in FIG. 4(a), the working fluid F1 flows in the direction U in the working fluid passage 31, then flows radially inward of the cylinder part 13, and then flows into the first passage 33 via the first port 28. At this time, the first port 28 is partially opened at its side in the direction D, and the first passage 33 is positioned toward the direction D relative to the first port 28. The working fluid F1 flows out the first port 28 in the direction D with respect to the axis line X of the cylinder part 13.

The working fluid F1, after flowing into the first passage 33, goes out and flows into the working fluid passage 32 via the second port 29. At this time, the second port 29 is partially opened at its side in the direction D, and the second port 29 is positioned in the direction U relative to the first passage 33. The working fluid F1 flows out the second port 29 in the direction U with respect to the axis line X of the cylinder part 13. The working fluid F1, after flowing through the working fluid passage 32, goes out of the cylinder part 13.

As shown in FIG. 4(b), in the rest of the first ports 28 and the second ports 29 as well, the working fluid F1 flows in the same manner. The plurality of first ports 28 having the same shape are arranged at regular intervals with respect to the circumferential direction of the cylinder part 13. Therefore, a load occurring in the radial direction of the plunger part 34 is relatively likely to balance. This can reduce a frictional force occurring between the cylinder part 13 and the plunger part 34.

FIG. 4(c) and FIG. 4(d) are diagrams showing, on an enlarged scale, a part of the damping force control valve 10 shown in FIG. 3(a) and FIG. 3(b), and illustrating a situation where a working fluid flows into the second ports 29 of the damping force control valve 10.

As shown in FIG. 4(c), the working fluid F2 flows in the working fluid passage 32 in the direction radially inward of the cylinder part 13, and flows into the first passage 33 via the second port 29. At this time, the second port 29 is partially opened at its side in the direction D, and the first passage 33 is positioned toward the direction D relative to the second port 29. The working fluid F2 flows out the second port 29 in the direction D with respect to the axis line X of the cylinder part 13.

The working fluid F2, after flowing into the first passage 33, goes out and flows into the working fluid passage 31 via the first port 28. At this time, the first port 28 is partially opened at its side in the direction D, and the first port 28 is positioned in the direction U relative to the first passage 33. The working fluid F2 flows out the first port 28 in the direction U with respect to the axis line X of the cylinder part 13. The working fluid F2, after flowing into the working fluid passage 31, flows radially outward of the cylinder part 13, then flows in the direction D, and then flows out of the cylinder part 13.

As shown in FIG. 4(d), in the rest of the first ports 28 and the second ports 29 as well, the working fluid F2 flows in the same manner. The plurality of second ports 29 having the same shape are arranged at regular intervals with respect to the circumferential direction of the cylinder part 13. Therefore, a load occurring in the radial direction of the plunger part 34 is relatively likely to balance. This can reduce a frictional force occurring between the cylinder part 13 and the plunger part 34.

A stream of the working fluid F1 from the first port 28 (FIG. 4(a) and FIG. 4(b)) and a stream of the working fluid F2 from the second port 29 (FIG. 4(c) and FIG. 4(d)) flow opposite directions, but flow through the same path. To be specific, the working fluids F1 and F2 flow in the direction D when flowing into the first passage 33, and flow in the direction U when flowing out the first passage 33, as shown in FIG. 4(a) and FIG. 4(c). This enables more similar flow rate characteristics (damping force characteristics) to be obtained even when inflow and outflow directions of the working fluid are interchanged.

As shown in FIG. 4(b) and FIG. 4(d), ports (the first ports 28 or the second ports 29) through which the working fluids F1 and F2 flow in and ports (the second ports 29 or the first ports 28) through which the working fluids F1 and F2 flow out are alternately arranged at regular intervals along the circumferential direction of the cylinder part 13. This can reduce a frictional force occurring between the cylinder part 13 and the plunger part 34.

Next, a change in the area over which the first ports 28 communicate with the first passage 33 and in the area over which the second ports 29 communicate with the first passage 33 will be described with reference to FIG. 5(a) to FIG. 5(f).

FIG. 5(a) is a partial cross-sectional view showing, on an enlarged scale, the first port 28 that is fully closed. FIG. 5(b) shows the first port 28 and the second port 29 in a state shown in FIG. 5(a), as seen along a direction indicated by the arrow Z. A partial cross-sectional view of the second port 29 on an enlarged scale is not shown, because it is the same as the partial cross-sectional view of the first port 28 on an enlarged scale except that it is laterally inverted from FIG. 5(a) and that the first port 28 and the working fluid passage 31 shown in FIG. 5(a) are replaced with the second port 29 and the working fluid passage 32, respectively. The same applies to FIG. 5(c) and FIG. 5(e).

As shown in FIG. 5(a), when the damping force control valve 10 is fully closed, the first passage 33 is positioned toward the direction D (valve closing direction) relative to the first port 28 and the second port 29 with respect to the axis line X of the cylinder part 13. As shown in FIG. 5(b), the first port 28 and the second port 29 are closed by the outer circumferential surface 34c of the plunger part 34. The first port 28 and the second port 29 are not in communication with the first passage 33. After the plunger part 34 in the state shown in FIG. 5(a) and FIG. 5(b) moves in the direction U (valve opening direction), the plunger part 34 comes into a state shown in FIG. 5(c) and FIG. 5(d)

FIG. 5(c) is a partial cross-sectional view showing, on an enlarged scale, the first port 28 that is partially opened. FIG. 5(d) shows the first port 28 and the second port 29 in a state shown in FIG. 5(c), as seen along a direction indicated by the arrow Z.

As shown in FIG. 5(c) and FIG. 5(d), movement of the plunger part 34 in the direction U (valve opening direction) causes the first port 28 and the second port 29 to communicate with each other via the first passage 33. At this time, the portion of the first port 28 and the portion of the second port 29 that communicate with the first passage 33 are caused at the same side (in the direction D) in the first and second ports 28 and 29 with respect to the axis line X of the cylinder part 13.

Then, as the plunger part 34 in the state shown in FIG. 5(c) and FIG. 5(d) moves in the direction U (valve opening direction), the portion of the first port 28 and the portion of the second port 29 that communicate with the first passage 33 gradually widen from the same side (in the direction D) with respect to the axis line X of the cylinder part 13.

FIG. 5(e) is a partial cross-sectional view showing, on an enlarged scale, the first port 28 that is fully opened. FIG. 5(f) shows the first port 28 and the second port 29 in a state shown in FIG. 5(e), as seen along a direction indicated by the arrow Z.

In this embodiment, when the damping force control valve 10 is fully opened, the first port 28 and the second port 29 are not closed by the outer circumferential surface 34c of the plunger part 34, and the first port 28 and the second port 29 are entirely in communication with the first passage 33, as shown in FIG. 5(e) and FIG. 5(f).

As shown in FIG. 5(a) to FIG. 5(f), when the plunger part 34 moves, the area over which the first port 28 communicates with the first passage 33 and the area over which the second port 29 communicates with the first passage 33 are changed. More specifically, when the plunger part 34 moves in the direction U, the area over which the first port 28 communicates with the first passage 33 and the area over which the second port 29 communicates with the first passage 33 are increased.

In the course of movement of the plunger part 34, the area and shape of the portion of the first port 28 that communicates with the first passage 33 are substantially equal to the area and shape of the second port 29 that communicates with the first passage 33. Accordingly, the ratio between the area over which the first port 28 communicates with the first passage 33 and the area over which the second port 29 communicates with the first passage 33 is substantially constant.

With other words, the damping force control valve is configured such that an opening in both the first port 28 and the second port 29, from the same direction relative to the axis line X of the cylinder part 13, is formed as the plunger part 34 moves. This allows a communication between the first port 28 and the second port 29 via the first passage 33. The first port 28, the second port 29 and the first passage 33 are located between the opposite ends of the plunger part 34 with respect to the axial direction X of the cylinder part 13. The movement of the plunger part 34 causes or effects a portion of the first port 28 and a portion of the second port 29 that communicate with the first passage 33. The portions are caused at the same side of the first and second ports 28, 29 along the axial direction X of the cylinder part 13. The opening in both the first and second ports 28, 29 corresponds to the portion of the first port 28 and the portion of the second port 29 that communicate with the first passage 33 respectively."

### <Second Embodiment>

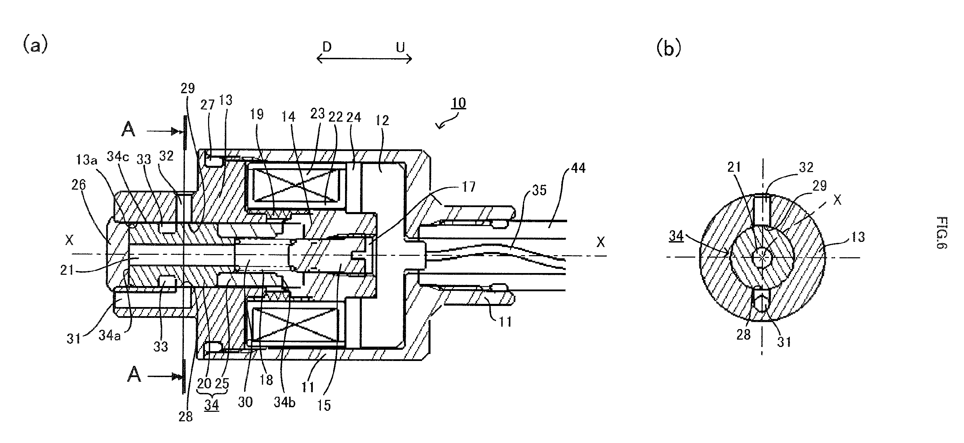

FIG. 6(a) is a vertical cross-sectional view schematically showing a state where a damping force control valve according to a second embodiment of the present invention is closed. FIG. 6(b) shows a cross-section as taken along the line A-A of FIG. 6(a). In FIG. 6(a) and FIG. 6(b), the same parts as those shown in FIG. 1(a) to FIG. 5(f) are given the same reference signs as those given on FIG. 1(a) to FIG. 5(f). The damping force control valve according to the first embodiment is provided with a plurality of (three) pairs of the first ports 28 and the second ports 29, but the damping force control valve according to the second embodiment is provided with one pair of the first port 28 and the second port 29. Except for this point, the damping force control valve according to the second embodiment is identical to the damping force control valve according to the first embodiment. Therefore, the first port 28 and the second port 29 have the same shape. The portion of the first port 28 and the portion of the second port 29 that communicate with the first passage 33 are changed along with movement of the plunger part 34, as shown in FIG. 5(a) to FIG. 5(f). In the following, a description will be given to points different from the first embodiment.

In a damping force control valve 10 according to the second embodiment, a working fluid flows in the radial direction of the cylinder part 13 through a single first port 28, to be blocked by the plunger part 34. A working fluid also flows in the radial direction of the cylinder part 13 through a single second port 29, to be blocked by the plunger part 34. Directions in which the working fluid flows into the first port 28 and flows into the second port 29 are different directions. The working fluid flowing into the first port 28 and the working fluid flowing into the second port 29 have in common that the working fluid flows in the radial direction of the cylinder part 13 from ports that are positioned so as to intersect with the same plane perpendicular to the axis line X of the cylinder part 13. This enables more similar flow rate characteristics (damping force characteristics) to be obtained even when inflow and outflow directions of the working fluid are interchanged. Thus, a stable damping force can be obtained even when inflow and outflow directions of the working fluid are interchanged.

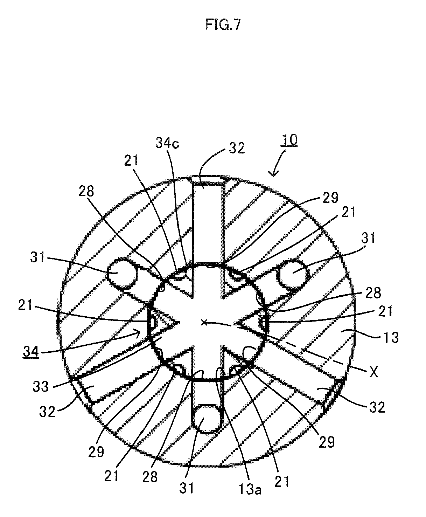

While the damping force control valves 10 according to the first and second embodiments have been described above, the present invention is not limited to these embodiments. For example, a damping force control valve shown in FIG. 7 may be adoptable.

FIG. 7 is a horizontal cross-sectional view showing a variation of the damping force control valve according to the present invention. In FIG. 7, parts corresponding to the parts of the first embodiment (FIG. 1(a) to FIG. 5(f)) are given the same reference signs as those given in the first embodiment. FIG. 7 shows the damping force control valve that is opened.

The damping force control valve 10 shown in FIG. 7 is different from the damping force control valve 10 of the first embodiment, in terms of the first passage 33 and the second passage 21. Except for this point, the damping force control valve 10 shown in FIG. 7 is identical to the damping force control valve 10 of the first embodiment. Therefore, only the first passage 33 and the second passage 21 will be described below.

In the damping force control valve 10 shown in FIG. 7, the first passage 33 extends in the radial direction of the cylinder part 13. To be specific, the first passage 33 extends from the plurality of the first ports 28 and the second ports 29 toward the radially center of the cylinder part 13.

The second passage 21 is formed on the outer circumferential surface 34c of the plunger part 34, and extends in the direction of the axis line X of the cylinder part 13. The second passage 21 is located between the first port 28 and the second port 29 with respect to the circumferential direction of the cylinder part 13.

That is, in the present invention, it is acceptable that the first passage 33 is formed on the outer circumferential surface 34c of the plunger part 34. The first passage 33 may be formed along the circumferential direction of the plunger part 34 as illustrated in the first embodiment, or may be formed so as to extend in the radial direction of the plunger part 34 as illustrated in the variation described above. The second passage 21 may penetrate through the plunger part 34 with respect to the direction of the axis line X as illustrated in the first embodiment, or may be formed on the outer circumferential surface 34c of the plunger part 34 so as to extend in the direction of the axis line X as illustrated in the variation described above. Instead, the second passage 21 may be formed on the inner circumferential surface 13a of the cylinder part 13 so as to extend in the direction of the axis line X.

### «Shock Absorber»

Next, a shock absorber will be described.

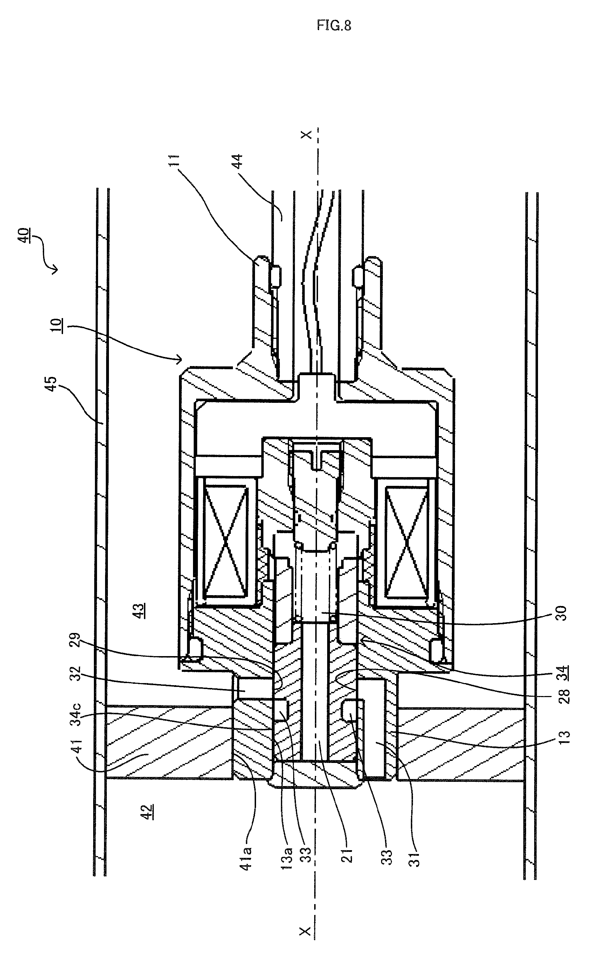

FIG. 8 is a partial cross-sectional view showing, on an enlarged scale, one example of a shock absorber including the damping force control valve according to the first embodiment.

A shock absorber 40 shown in FIG. 8, which includes the damping force control valve 10 according to the first embodiment, is configured such that a working fluid flows in a direction from the first port 28 toward the second port 29 and a direction from the second port 29 toward the first port 28.

The shock absorber 40 includes a cylinder 45. A piston 41 is arranged in the cylinder 45 such that the piston 41 is movable along the axial direction of the cylinder 45. The piston 41 has a through hole 41a that penetrates through the piston 41 in the axial direction of the cylinder 45. The cylinder part 13 of the damping force control valve 10 is fitted in the through hole 41 a. The damping force control valve 10 is provided to the piston 41 in this manner. The damping force control valve 10 is movable together with the piston 41 within the cylinder 45 along the axis line of the cylinder 45.

The piston 41 divides the interior of the cylinder 45 into a first working fluid chamber 42 and a second working fluid chamber 43. The damping force control valve 10 is located in the second working fluid chamber 43.

The first port 28 is in communication with the first working fluid chamber 42 via the working fluid passage 31. The second port 29 is in communication with the second working fluid chamber 43 via the working fluid passage 32.

In FIG. 8, the first port 28 and the second port 29 are closed by the plunger part 34, so that the first working fluid chamber 42 and the second working fluid chamber 43 are not in communication with each other. When the plunger part 34 moves to bring the first port 28 and the second port 29 into the open state (see FIG. 3), the first working fluid chamber 42 and the second working fluid chamber 43 come into communication with each other.

The support shaft 44 is provided to the outer cylinder 11 of the damping force control valve 10. The support shaft 44 supports the piston 41 and the damping force control valve 10 within the cylinder 45. The support shaft 44 extends along the axis line of the cylinder 45 and extends out of the cylinder 45, though not shown.

When a force that pushes the support shaft 44 toward the second working fluid chamber 43 side is applied to the support shaft 44, the pressure in the second working fluid chamber 43 rises. A stream of the working fluid generated at this time is blocked by the plunger part 34 (see FIG. 2(c) and FIG. 2(d)). When a force that pulls the support shaft 44 toward the first working fluid chamber 42 side is applied to the support shaft 44, the pressure in the first working fluid chamber 42 is raised by the working fluid. A stream of the working fluid generated at this time is blocked by the plunger part 34 (see FIG. 2(a) and FIG. 2(b)). This enables more similar flow rate characteristics (damping force characteristics) to be obtained even when inflow and outflow directions of the working fluid are interchanged. Thus, a stable damping force can be obtained.

In the shock absorber 40, when a force that pushes the support shaft 44 toward the second working fluid chamber 43 side is applied to the support shaft 44 under a state where the damping force control valve 10 is opened, the working fluid flows in the direction from the second port 29 toward the first port 28 (see FIG. 4(c) and FIG. 4(d)). When a force that pulls the support shaft 44 toward the first working fluid chamber 42 side is applied to the support shaft 44 under such a state, the working fluid flows in the direction from the first port 28 toward the second port 29 (see FIG. 4(a) and FIG. 4(b)).

As described above with reference to FIG. 4(a) to FIG. 4(d), the damping force control valve 10 enables similar flow rate characteristics to be obtained when the working fluid flows from the first port 28 toward the second port 29 and when the working fluid flows from the second port 29 toward the first port 28. Accordingly, a stable damping force can be obtained irrespective of in which of the directions the working fluid flows.

While some embodiments of the present invention have been described, the present invention is not limited to the above-described embodiments. For example, the following configurations are adoptable.

In this embodiment, movement of the plunger part 34 in the direction D closes the damping force control valve 10 while movement of the plunger part 34 in the direction U opens the damping force control valve 10. Therefore, the portion of the first port 28 and the portion of the second port 29 that communicate with the first passage 33 are caused at the side in the direction D on the first and second ports 28 and 29. The present invention is not limited to this example. In another possible example, movement of the plunger part 34 in the direction D opens the damping force control valve 10 while movement of the plunger part 34 in the direction U closes the damping force control valve 10. In this case, the portion of the first port 28 and the portion of the second port 29 that communicate with the first passage 33 are caused at the side in the direction U on the first and second ports 28 and 29.

In this embodiment, the damping force control valve 10 includes a pull type solenoid, and is configured such that the plunger part 34 moves in the direction U when a current is fed while the plunger part 34 moves in the direction D when feeding of the current is interrupted. The present invention is not limited to this example. In another possible example, the damping force control valve 10 includes a push type solenoid, and is configured such that the plunger part 34 moves in the direction D when a current is fed while the plunger part 34 moves in the direction U when feeding of the current is interrupted. The solenoid is not limited to the one adopted in the above-described embodiments, and a conventionally known configuration is adoptable. In the damping force control valve 10 of the present invention, it suffices that the plunger part 34 is placed within the internal space 30 such that the plunger part 34 is movable along the axis line X of the cylinder part 13. It is not always necessary that the damping force control valve 10 includes a solenoid.

In the first embodiment, a plurality of pairs of the first ports 28 and the second ports 29 are provided such that they intersect with a single plane perpendicular to the axis line X of the cylinder part 13, but the present invention is not limited to this example. In another possible example, a plurality of pairs of first ports and second ports or a single pair of a first port and a second port are provided such that they intersect with a single plane perpendicular to the axial direction of the cylinder part, while an additional plurality of pairs of first ports and second ports or an additional single pair of a first port and a second port are provided such that they intersect with another plane perpendicular to the axial direction of the cylinder part. In other words, the plurality of pairs of first ports and second ports or the single pair of a first port and a second port may be provided at positions different from the positions of the additional plurality of pairs of first ports and second ports or the additional single pair of a first port and a second port with respect to the axial direction of the cylinder part.

In the embodiments described above, the first passage 33 is formed on the plunger part 34 at a location between the opposite ends 34a and 34b of the plunger part 34. The first passage 33 is not exposed to either of the ends 34a or 34b of the plunger part 34. In the present invention, however, the first passage may be exposed to either of the ends of the plunger part.

While some preferred embodiments of the present invention have been thus far described, it is obvious that various changes and modifications can be made within the scope and the spirit of the present invention. The scope of the present invention is limited only by the accompanied claims.

### [DESCRIPTION OF THE REFERENCE SIGNS]

- 10: damping force control valve
- 11: outer cylinder
- 12: base
- 13: cylinder part
- 13a: inner circumferential surface
- 14: support member
- 15: spring-bearing member
- 17: position adjustment member
- 18: coil spring
- 19: cylindrical member
- 20: front-end cylinder
- 21: second passage
- 22: bobbin
- 23: solenoid coil
- 24: annular member
- 25: rear-end cylinder
- 26: cap
- 27: sealing member
- 28: first port
- 29: second port
- 30: internal space
- 31: working fluid passage
- 32: working fluid passage
- 33: first passage
- 34: plunger part
- 34a: front end
- 34b: rear end
- 34c: outer circumferential surface
- 35: cable
- 40: shock absorber
- 41: piston
- 41a: through hole
- 42: first working fluid chamber
- 43: second working fluid chamber
- 44: support shaft
- 45: cylinder

## Claims

1. A damping force control valve (10), comprising:
a cylinder part (13), and
a plunger part (34),
wherein the cylinder part (13) includes an internal space (30) that extends in an axial direction (X) of the cylinder part (13),
wherein the plunger part (34) is arranged in the internal space (30) such that the plunger part (34) is movable along an axis line of the cylinder part (13),
wherein the cylinder part (13) has, on an inner circumferential surface (13a) thereof, a first port (28) and a second port (29) that are configured to be in communication with a first passage (33) formed on the plunger part (34),
wherein the first port (28) and the second port (29) are positioned so as to intersect with the same plane that is perpendicular to the axis line of the cylinder part (13), each of the first port (28) and the second port (29) being in communication with a working fluid passage (31, 32) that extends from the inner circumferential surface (13a) of the cylinder part (13) in a direction radially outward of the cylinder part (13), the first port (28) and the second port (29) being communicable with each other via the first passage (33),
wherein the plunger part (34) is configured such that opposite ends thereof are located within the internal space (30) and in communication with each other via a second passage (21) that is different from the first passage (33),
wherein the damping force control valve (10) is configured such that, when the first port (28) and the second port (29) come into communication with each other via the first passage (33) by a movement of the plunger part (34), a portion of the first port (28) and a portion of the second port (29) that communicate with the first passage (33) are caused, the portions being caused at the same side of the first and second ports (28, 29) along the axial direction (X) of the cylinder part (13), and the first port (28), the second port (29), and the first passage (33) being located between the opposite ends of the plunger part (34) with respect to the axial direction (X) of the cylinder part (13).

2. The damping force control valve (10) according to claim 1, wherein
the plunger part (34) is configured to be movable, by means of a solenoid, linearly to and fro within a range as long as the first port (28), the second port (29), and the first passage (33) are located between the opposite ends of the plunger part (34) with respect to the axial direction (X) of the cylinder part (13).

3. The damping force control valve (10) according to claim 1 or 2, wherein
when the plunger part (34) moves within a range as long as the first port (28), the second port (29), and the first passage (33) are located between the opposite ends of the plunger part (34) with respect to the axial direction (X) of the cylinder part (13), the area over which the first port (28) communicates with the first passage (33) and the area over which the second port (29) communicates with the first passage (33) are changed, while the ratio between the area over which the first port (28) communicates with the first passage (33) and the area over which the second port (29) communicates with the first passage (33) are substantially kept constant.

4. The damping force control valve (10) according to claim 3, wherein
the area of the first port (28) and the area of the second port (29) are substantially equal.

5. The damping force control valve (10) according to any one of claims 1 to 3, wherein
a plurality of pairs of the first ports (28) and the second ports (29) are formed on the inner circumferential surface (13a) of the cylinder part (13).

6. The damping force control valve (10) according to any one of claims 1 to 5, wherein
when the first port (28) and the second port (29) are in communication with each other via the first passage (33), the first port (28), the second port (29), and the first passage (33) are positioned so as to intersect with the same plane that is perpendicular to the axis line of the cylinder part (13).

7. A shock absorber (40), comprising
the damping force control valve (10) according to any one of claims 1 to 6.

8. The shock absorber (40) according to claim 7, comprising
a cylinder (45),
a piston (41),
a first working fluid chamber (42), and
a second working fluid chamber (43),
wherein the piston (41) is arranged in the cylinder (45) so as to be movable in the axial direction (X) of the cylinder (45), the piston (41) dividing the interior of the cylinder (45) into the first working fluid chamber (42) and the second working fluid chamber (43),
wherein the first port (28) is in communication with the first working fluid chamber (42) via the working fluid passage (31),
wherein the second port (29) is in communication with the second working fluid chamber (43) via the working fluid passage (32).
